Europäisches Patentamt

European Patent Office

Office européen des brevets

(19)

(11) Publication number: **0 157 030**
**B1**

(12) **EUROPEAN PATENT SPECIFICATION**

(45) Date of publication of patent specification: **19.07.89**

(51) Int. Cl.⁴: **B 32 B 17/10,** C 08 J 7/04, C 09 D 3/82

(21) Application number: **84302369.8**

(22) Date of filing: **06.04.84**

(54) **Polyvinyl butyral laminates.**

(43) Date of publication of application:
**09.10.85 Bulletin 85/41**

(45) Publication of the grant of the patent:
**19.07.89 Bulletin 89/29**

(84) Designated Contracting States:
**BE DE FR GB IT NL SE**

(56) References cited:
**EP-A-0 047 160**
**EP-A-0 157 965**
**FR-A-2 384 009**
**US-A-3 547 766**
**US-A-3 900 673**
**US-A-4 177 315**

(73) Proprietor: **E.I. DU PONT DE NEMOURS AND COMPANY**
**1007 Market Street**
**Wilmington Delaware 19898 (US)**

(72) Inventor: **Kwiatkowski, Charles Thomas**
**1107 Pheasant Hollow Drive**
**Plainsboro New Jersey 08536 (US)**

(74) Representative: **Jones, Alan John et al**
**CARPMAELS & RANSFORD 43 Bloomsbury Square**
**London, WC1A 2RA (GB)**

# EP 0 157 030 B1

**Description**

Background of the invention

Polyvinyl butyral is widely used in combination with one or more layers of glass or other glazing material to provide a laminate which is resistant to shattering. In recent years, effort has been directed to the preparation of other composites which can be used in combination with glass to provide not only resistance to shattering but protection against abrasion and scratching when used as a component of a glazing material.

The preparation of laminates for use in automotive windshields presents unusually stringent requirements. In addition to the basic requirements noted above, an automotive windshield must provide high impact resistance and excellent optical clarity. Beyond this, for improved fuel efficiency, these characteristics should desirably be provided at a minimum weight. Previously, attempts to provide this combination of properties have often resulted in a laminate that performed well at ambient conditions, but crazed when exposed to especially high or low temperatures or humidity.

Summary of the invention

The present invention provides an improved process for the production of polymeric laminates useful in conjunction with glazing material, as well as the resulting products, which are characterized by outstanding abrasion resistance, clarity and adhesion to glazing material.

Specifically, the instant invention provides a process for preparing a polymeric laminate comprising:

a) treating both sides of a biaxially oriented, dimensionally stable, polyethylene terephthalate film having a thickness of 51—178 μm (2—7 mils) and a haze level of less than 1.0%, to enhance the ability of the film to adhere to other materials;

b) coating at least one surface of the resulting polyethylene terephthalate film to a thickness of 1—20 μm with an organic silanol coating composition comprising:

(i) 5—50 weight percent solids, the solids complementally comprising 10—70 parts by weight silica; 1—20 parts by weight of a partially polymerized epoxy functional silanol; and 30—90 parts by weight of a partially polymerized organic silanol of the general formula $RSi(OH)_3$, wherein R is methyl, optionally up to 40% of R groups being replaced by a radical selected from the group consisting of vinyl and phenyl, and

(ii) 95—50 weight percent solvent, the solvent comprising 10—90 parts by weight water and 90—10 parts by weight lower aliphatic alcohol and containing 0.01—1.0% by weight of solvent of non-ionic surfactant; the coating composition having a pH of 6.2—6.5;

c) bonding the polyethylene terephthalate film at elevated heat and pressure to a sheet of plasticized polyvinyl butyral to provide a laminate in which the surface of the polyethylene terephthalate not bonded to the polyvinyl butyral is coated with the organic silanol composition, said polyethylene terephthalate film having been heat relaxed at a temperature above the temperature at which the coated film is bonded to the sheet of polyvinyl butyral.

The instant invention further provides a polymeric laminate comprising,

a) a sheet of plasticized polyvinylbutyral,

b) a biaxially oriented, dimensionally stable, polyethylene terephthalate film bonded to the polyvinyl butyral and having a thickness of 51—178 μm (2—7 mils) and a haze level of less than 1.0%, the polyethylene terephthalate film having been heat relaxed at a temperature above the temperature at which the coated film is bonded to the sheet of plasticized polyvinylbutyral and the polyethylene terephthalate film having been treated on both sides to enhance the ability of the film to adhere to other materials and,

c) a coating on the polyethylene terephthalate film having a thickness of 1—20 μm, the coating having been produced from an organic silanol composition comprising:

(i) 5—50 weight percent solids, the solids complementally comprising 10—70 parts by weight silica; 1—20 parts by weight of a partially polymerized epoxy functional silanol; and 30—90 parts by weight of a partially polymerized organic silanol of the general formula $RSi(OH)_3$, wherein R is methyl, optionally up to 40% of R groups being replaced by a radical selected from the group consisting of vinyl and phenyl, and

(ii) 95—50 weight percent solvent, the solvent comprising about 10—90 parts by weight water and 90—10 parts by weight lower aliphatic alcohol and containing 0.01—1.0% by weight of solvent of non-ionic surfactant; the coating composition having a pH of 6.2—6.5; and in which at least the surface of the polyethylene terephthalate film not bonded to the polyvinyl butyral bears coating (c).

Preferably, the polyethylene terephthalate film is flame treated on both sides to enhance the ability of the film to adhere to other materials.

Detailed description of the invention

The present invention is based on the discovery that in the preparation of a laminate of polyvinyl butyral and polyethylene terephthalate having an abrasion resistant coating, the selection of specific components and process variables will result in a laminate particularly suitable for use with glazing materials which exhibits outstanding optical properties, integrity, resistance to crazing at extreme temperatures and humidity, abrasion resistance and adhesion to glazing materials. In addition, the laminates provide glazing materials with markedly improved penetration resistance.

The polyethylene terephthalate sheeting used in the present invention is biaxially oriented by

2

stretching at least about 2.5 times in each of the longitudinal and transverse directions in the plane of the film. An important feature of the polyethylene terephthalate films used in the present invention is that they exhibit a haze level of less than about 1.0%, as measured according to ANSI/ASTM D 1003—61, using the hazemeter specified in that test. This haze level is attained by the absence of filler and uniform surface characteristics resulting from processing conditions described in Alles, U.S. Patent 2,779,684, hereby incorporated by reference. In addition, the film is dimensionally stabilized by heating under tension (i.e. heat relaxation) as described in the Alles patent. This dimensional stabilization should be carried out at a temperature above the temperature at which the polyethylene terephthalate film is bonded to the plasticized polyvinyl butyral sheet.

Both surfaces of the polyethylene terephthalate film are conditioned to enhance their ability to adhere to other materials. The surfaces are preferably conditioned by direct contact with a gas flame for a period of time sufficient to alter the surface characteristics of the treated material, but not for so long a period as to change the bulk properties of the film. Flame treating techniques previously known which can be used in the present invention include those described in Kreidl U.S. Patent 2,632,921, Kritchever U.S. Patent 2,648,097, Kritchever U.S. Patent 2,683,894 and Kreidl U.S. Patent 2,704,382. Preferably a reducing flame having a high fuel to oxygen ratio is used.

Other electrical and chemical surface conditioning treatments known to improve adhesion of polymeric films can also be used in the instant invention. In addition, combinations of treatments can be used to enhance the ability of the polyethylene terephthalate film to adhere. For example, one surface of the film can be flame treated and the second surface coated with an adhesion promoting material, such as the water-permeable colloid described in the Alles patent to which reference is made above.

The polyethylene terephthalate film, after conditioning to improve adhesion, is next coated on at least one conditioned side with an abrasion resistant coating of the composition indicated above. The coating is present in a final coating thickness of about 1—20 μm. The silica and organic silanol components and the general preparation of these coating compositions are described in detail in Ubersax U.S. Patent 4,177,315. However, in addition to the silica and organic silanol described in that patent, the present coating composition further comprises, as about 1—20 percent of the solids in the coating composition, an epoxy functional silanol. Epoxy functional silanes which can be used to provide the silanols in the present invention include, for example, gamma - glycidoxypropyl - trimethoxysilane as well as beta - (3,4 - epoxycyclohexyl) - ethyltrimethoxy - silane. These compositions are commercially available from Union Carbide Corporation as A-187 and A-186, respectively. Other epoxy functional silanes known in the art can also be used.

The coating solution, in accordance with the present invention, also contains about 0.01—1.0%, by weight of the solvent, of a non-ionic surfactant. A wide variety of such surfactants is commercially available, including, for example, fluorosurfactants available from E. I. du Pont de Nemours and Company as Zonyl (Trade Mark) non-ionic fluorosurfactants, and from 3M as Fluorad (Trade Mark) non-ionic fluorosurfactants. Particularly preferred because of compatibility with the other components of the coating solution are silicone surfactants. Such silicone surfactants include, for example, polyalkylene oxide methylpolysiloxanes, such as those commercially available from Union Carbide as Silwet (Trade Mark) Surface Active Copolymers and those commercially available from Dow Corning Corporation as silicone glycol copolymer fluids. One such silicone surfactant found to be particularly useful is the polyethyleneoxide methyl siloxane commercially available from Union Carbide Corporation as Silwet (Trade Mark) L-720.

The coated polyethylene terephthalate film is next laminated, under typical conditions of elevated temperature and pressure, to a plasticized polyvinyl butyral resin sheet. The lamination is carried out to provide a polyethylene terephthalate film surface coated with the abrasion resistant coating opposite to the surface of the film bonded to the polyvinyl butyral. The preparation of such polyvinyl butyral sheeting is described, for example, in VanNess U.S. Patent 2,720,501, Stamatoff U.S. Patent 2,400,957, and Woodworth U.S. Patent 2,739,080. The polyvinyl butyral can contain a wide variety of plasticizers, as known in the art, including, for example, triethylene glycol di - 2 - ethylbutyrate, dihexyl adipate, triethylene glycol di - n - heptanoate, tetraethylene glycol di - n - heptanoate, propylene oxide oligomers and mixtures of these and other plasticizers. Particularly satisfactory polyvinyl butyral sheeting is that commercially available as "Butacite" (Trade Mark) plasticized polyvinyl butyral resin sheeting from E. I. du Pont de Nemours and Company.

The polyvinyl butyral used in the present invention should exhibit a satisfactorily high level of adhesion to glazing materials. This level of adhesion is attained by minimizing the adhesion control additives, for example, used in the polyvinyl butyral sheeting. A maximum of about 400 parts per million of potassium based adhesion control additives can be used in polyvinyl butyral plasticized with tetraethylene glycol di - n - heptanoate. The level of adhesion control additives should be such as to provide a peel force between the polyvinyl butyral sheeting and the polyester film or glass of at least about 876 N/m (5 pounds per inch).

The polyvinyl butyral surface of the present laminates can be bonded to glass using elevated heat and pressure in conventional laminating techniques. The resulting structure exhibits excellent optical characteristics, abrasion resistance, and penetration resistance. In addition, the laminates show exceptional resistance to crazing at extremely high and low temperatures and high humidity.

The invention is further illustrated in the following examples, in which parts and percentages are by weight unless otherwise indicated.

Examples 1—3 and Comparative Examples A—D

In Examples 1 and 2, 550 parts of a 30 percent aqueous solution of colloidal silica was added to a reaction vessel. The pH of the solution was adjusted to 5.0 by the addition of glacial acetic acid. 350 parts of methyltrimethoxysilane and 43.7 parts of gamma - glycidoxypropyl trimethoxy silane primer (commercially available from Union Carbide Corporation as "A-187") were added, and the solution was mixed for 6 hours at room temperature. 1250 parts of a 2/1 isopropanol/water mixture was then added along with 0.8 parts of silicone surfactant, resulting in a final pH of the solution of 6.2.

A 0.1 mm (4-mil) biaxially oriented, heat relaxed polyethylene terephthalate film having a haze level of less than 1% was flame-treated by contact with a reducing flame to improve the adhesion characteristics. The film was then coated on both sides with the silane solution prepared above. Excess solution was allowed to drain from the polyester film, which was then placed in an oven with a circulating air flow maintained at about 100°C for 3 minutes in Example 1 and at about 150°C for thirty minutes in Example 2. The dried thickness of the coating was about 4 µm in each case.

In Example 3, the procedure of Example 2 was repeated, except that the epoxy silane was replaced with beta - (3,4 - epoxycyclohexyl) - ethyltrimethoxy - silane (commercially available from Union Carbide Corporation as "A-186").

In Comparative Examples A and B, the procedure of Examples 1 and 2 was repeated, except that the epoxy silane was eliminated from the coating applied to the flame-treated polyethylene terephthalate film.

In Comparative Examples C and D the procedure of Comparative Examples A and B was repeated, except that the polyethylene terephthalate film was treated by an electrical corona discharge instead of the reducing flame and the polyethylene terephthalate film was primed by application of a solution of the primer directly to the film instead of incorporating the primer into the coating solution. The primer solution was prepared by adding 2 parts of gamma - glycidoxypropyl trimethoxy silane to 98 parts of butanol in a mixing vessel. The polyethylene terephthalate film was first corona discharge treated, and then coated on both sides with the primer solution. Excess solution was allowed to drain from the polyethylene terephthalate film, which was then placed in an oven with a circulating air flow maintained at about 120°C for 30 minutes. The primed polyethylene terephthalate film was then coated on both sides with the silane solution of Comparative Examples A and B. Excess solution was allowed to drain from the polyethylene terephthalate film which was then placed in an oven maintained at about 100°C for 3 minutes in Comparative Example C and at about 150°C for 30 minutes in Comparative Example D.

The coated films of Examples 1—3 and Comparative Examples A—D were tested for adhesion of the coating to the polyethylene terephthalate film as-produced and after at least 3 days in a chamber maintained at about 53°C and at about 100% relative humidity. The coating adhesion was determined by the tape adhesion parallel cut method (ASTM D 3002-71). A pressure-sensitive tape was applied to a 3-by-3 pattern of 9 squares of about 3.2 mm (1/8-inch) sides scribed through the coating on the polyethylene terephthalate film. The tape was then quickly removed and the fraction of film surface within the squares still covered by the coating was estimated. The coating of Examples 1—3, in which primer was incorporated into the coating solution, was superior to that of the Comparative Examples in adhesion and coating retention. The results are summarized in the following Table I.

# EP 0 157 030 B1

### TABLE I
### Adhesion of coating to polyethylene terephthalate film

| | | Tape peel test | |
|---|---|---|---|
| | | Coating remaining on substrate (%) | |
| Example | Description | As-produced | After 3 days/-53°C/100% R.H. |
|---|---|---|---|
| 1 | Flame-treated PET; A-187 epoxy-silane added; 3-minute cure at 100°C | 100 | 90 |
| 2 | Flame-treated PET; A-187 epoxy silane added; 30-minute cure at 150°C | 100 | 100 |
| 3 | Flame-treated PET; A-186 epoxy-silane added; 30-minute cure at 150°C | 100 | 98 |
| A | Flame-treated PET; No epoxy-silane added; 3-minute cure at 100°C | 30 | 0 |
| B | Flame-treated PET; No epoxy-silane added; 30-minute cure at 150°C | 100 | 0 |
| C | Corona discharge treated PET primed with A-187; No epoxy-silane added to coating solution; 3-minute cure at 150°C | 0 | — |
| D | Corona discharge treated PET primed with A-187; No epoxy-silane added to coating solution; 30-minute cure at 150°C | 0 | — |

The coated films of Example 1 and Comparative Example A were compared for abrasion resistance on the coated surface. An additional film, designated as Example E, was also tested for abrasion resistance. The film of Comparative Example E was prepared according to the procedure of Example 1 except that the polyethylene terephthalate film was not coated with any solution. The abrasion resistance was determined by the Taber Abraser method described in ANSI Z 26.1—1977 Section 5.17. An integrating sphere, photoelectric photometer was used to measure the light scattered by the samples before and after being exposed to 100 revolutions of an abrasive wheel carrying a load of 500 grams. The coated films of this invention were at least as abrasion resistant as those of the Comparative Examples. The results are summarized in the following Table II.

### TABLE II
### Abrasion resistance

| | | Taber abraser test |
|---|---|---|
| Example | Description | Change in percent haze after 100 cycles |
|---|---|---|
| 1 | Flame-treated PET; A-187 epoxy-silane added; 3-minute cure at 100°C | 0.5 |
| A | Flame-treated PET; No epoxy-silane added; 3-minute cure at 100°C | 1.2 |
| E | Flame-treated PET; No coating | 34 |

Example 4 and Comparative Examples F and G

In Example 4 and Comparative Examples F and G, craze resistance of the polyethylene terephthalate film was evaluated. In Example 4, the procedure of Example 1 was repeated; the polyethylene terephthalate film was heat-relaxed (heated under tension) at a temperature above the subsequent bonding temperature. In particular the film was heat-relaxed (heated under tension) at about 150°C.

5

EP 0 157 030 B1

The coated film was laminated to polyvinyl butyral sheeting having a hydroxyl content of about 23%, a potassium-based adhesion control additive content of about 250 ppm, a thickness of 0.76 mm (30 mils) and plasticized with about 28% of tetraethyleneglycol di-n-heptanoate. This composite was then further laminated to a sheet of 2.4 mm (3/32-inch) thick glass. The films were laminted at a pressure of 1.551 MPa (225 pounds per square inch) and a temperature of about 149°C for a period of 90 minutes to provide a unitary structure with excellent clarity.

In Comparative Example F the procedure of Example 4 was repeated, except that the polyethylene terephthalate film was heat-relaxed (heated under tension) at about 120°C.

In Comparative Example G, the procedure of comparative Example F was repeated, except that the flame treated polyethylene terephthalate film was replaced with a polyethylene terephthalate film coated with an adhesion-promoting water-permeable colloid as described in Alles, U.S. Patent 2,779,684 and which is commercially available from E. I. du Pont de Nemours and Company as CRONAR® P-42.

The laminates of Example 4 and Comparative Examples F and G were compared for integrity or lack of crazing or cracking after exposure to environmental extremes. The laminates were compared as-made, after exposure to about 53°C and 100% relative humidity for 1 week and after exposure to about −54°C for 12 hours. The results are summarized in the following Table III.

TABLE III
Craze resistance of coated polyethylene terephthalate film

| Example | | Condition after exposure to: | | |
| | | Room temp. | −54°C | 53°C 100% R.H. |
|---|---|---|---|---|
| 4 | Flame-treated PET; 150°C relaxation | Clear | Clear | Clear |
| F | Flame-treated PET; 120°C relaxation | Clear | Crazed | Clear |
| G | Gel-coated PET; 120°C relaxation | Clear | — | Crazed |

Comparative Examples H and I

The penetration resistance of glass laminates of the present invention was compared with laminates not containing the coated polyethylene terephthalate. In Comparative Example H, the procedure of Example 4 was repeated, except that the coated film was omitted. In Comparative Example I, a polyvinyl butyral film of the type used in Example 4 was laminated between two layers of 2.4 mm (3/32-inch or 90 mils) glass. The laminates of Example 4 and Comparative Examples H and I were compared for penetration resistance. The penetration resistance was determined by a changing height staircase method of dropping a 2.27 kg (5-pound) steel ball onto the 30.5 cm (12-inch) square laminates. The laminates of Example 4 were clamped in the support frame to insure failure by penetration and the laminates of Example 4 and Comparative Example H were contacted by the ball on the polymeric side of the laminate. The results obtained are summarized in the following Table IV.

TABLE IV
Penetration resistance of laminates

| Example | Description | Mean support height metres (feet) |
|---|---|---|
| 4 | PET/PVB/GLASS laminate | 9.66 (31.7) |
| H | PVB/GLASS laminate | 3.44 (11.3) |
| I | GLASS/PVB/GLASS laminate | 6.40 (21.0) |

Reference is made herein to the Applicants' copending Application No. 84302144. (EP—A—0 157 965) which discloses a polymeric laminate, and a process for preparing a polymeric laminate, similar to those of the present invention but wherein the solids of the organic silanol coating composition comprise 0.01 to 4 weight percent of azido functional silane.

6

# EP 0 157 030 B1

**Claims**

1. A process for preparing a polymeric laminate comprising:

a) treating both sides of a biaxially oriented, dimensionally stable, polyethylene terephthalate film having a thickness of 51—178 µm (2—7 mils) and a haze level of less than 1.0%, to enhance the ability of the film to adhere to other materials;

b) coating at least one surface of the resulting polyethylene terephthalate film to a thickness of 1—20 µm with an organic silanol coating composition comprising:

(i) 5—50 weight percent solids, the solids complementally comprising 10—70 parts by weight silica; 1—20 parts by weight of a partially polymerized epoxy functional silanol; and 30—90 parts by weight of a partially polymerized organic silanol of the general formula $RSi(OH)_3$, wherein R is methyl, optionally up to 40% of R groups being replaced by a radical selected from the group consisting of vinyl and phenyl, and

ii) 95—90 weight percent solvent, the solvent comprising 10—90 parts by weight water and 90—10 parts by weight lower aliphatic alcohol and containing 0.01—1.0% by weight of solvent of non-ionic surfactant; the coating composition having a pH of 6.2—6.5;

c) bonding the coated polyethylene terephthalate film at elevated heat and pressure to a sheet of plasticized polyvinyl butyral to provide a laminate in which the surface of the polyethylene terephthalate not bonded to the polyvinyl butyral is coated with the organic silanol composition, said polyethylene terephthalate film having been heat relaxed at a temperature above the temperature at which the coated film is bonded to the sheet of plasticized polyvinyl butyral;

with the proviso that the solids of the organic silanol coating composition do not comprise 0.01 to 4 weight percent of azido functional silane.

2. A process of Claim 1 wherein the epoxy functional silanol in the coating solution consists essentially of gamma - glycidoxypropyl - trimethoxy - silanol.

3. A process of Claim 1 wherein the epoxy functional silanol consists essentially of beta - (3,4 - epoxycyclohexyl) - ethyltrimethoxy - silanol.

4. A process of Claim 1, 2 or 3, wherein the non-ionic surfactant is a silicone surfactant.

5. A process of any one of Claims 1 to 4 wherein the polyvinyl butyral contains less than 400 parts per million of potassium based adhesion control agent.

6. A process of any one of Claims 1 to 5 wherein the polyethylene terephthalate film is treated on both sides with a reducing gas flame to enhance the ability of the film to adhere to other materials.

7. A process of any one of Claims 1 to 6 wherein one side of the polyethylene terephthalate film is coated with the coating composition and the polyvinyl butyral sheeting is bonded to the uncoated side of the polyethylene terephthalate film.

8. A process of any one of Claims 1 to 7 further comprising bonding at least one sheet of glass to the surface of the plasticized polyvinyl butyral.

9. A polymeric laminate comprising,

a) a sheet of plasticized polyvinylbutyral,

b) a biaxially oriented, dimensionally stable, polyethylene terephthalate film bonded to the polyvinyl butyral and having a thickness of 51—178 µm (2—7 mils) and a haze level of less than 1.0%, the polyethylene terephthalate film having been heat relaxed at a temperature above the temperature at which the coated film is bonded to the sheet of plasticized polyvinylbutyral and the polyethylene terephthalate film having been treated on both sides to enhance the ability of the film to adhere to other materials and,

c) a coating on the polyethylene terephthalate film having a thickness of 1—20 µm, the coating having been produced from an organic silanol composition comprising:

(i) 5—50 weight percent solids, the solids complementally comprising 10—70 parts by weight silica; 1—20 parts by weight of a partially polymerized epoxy functional silanol; and 30—90 parts by weight of a partially polymerized organic silanol of the general formula $RSi(OH)_3$, wherein R is methyl, optionally up to 40% of R groups being replaced by a radical selected from the group consisting of vinyl and phenyl, and

(ii) 95—50 weight percent solvent, the solvent comprising 10—90 parts by weight water and 90—10 parts by weight lower aliphatic alcohol and containing 0.01—1.0% by weight of solvent of non-ionic surfactant;

the coating composition having a pH of 6.2—6.5;

and in which at least the surface of the polyethylene terephthalate not bonded to the polyvinyl butyral bears coating (c);

with the proviso that the solids of the organic silanol coating composition do not comprise 0.01 to 4 weight percent of azido functional silane.

10. A laminate of Claim 9 wherein the epoxy functional silanol in the coating solution consists essentially of gamma - glycidoxypropyl - trimethoxy - silanol.

11. A laminate of Claim 9 wherein the epoxy functional silanol consists essentially of beta - (3,4 - epoxycyclohexyl) - ethyltrimethoxy - silanol.

12. A laminate of Claim 9, 10 or 11 wherein the non-ionic surfactant is a silicone surfactant.

13. A laminate of any one of Claims 9 to 12 wherein the polyvinyl butyral contains less than 400 parts per million of potassium based adhesion control agent.

7

14. A laminate of any one of Claims 9 to 13 wherein the polyethylene terephthalate film is treated on both sides with a reducing gas flame to enhance the ability of the film to adhere to other materials.

15. A laminate of any one of Claims 9 to 14 wherein one side of the polyethylene terephthalate film is coated with the coating composition and the polyvinyl butyral sheet is bonded to the uncoated side of the polyethylene terephthalate film.

16. A laminate of any one of Claims 9 to 15 further comprising at least one sheet of glass bonded to the surface of the plasticized polyvinyl butyral.

**Patentansprüche**

1. Verfahren zur Herstellung eines polymeren Laminats, welches umfasst:

a) die Behandlung beider Seiten einer biaxial orientierten, formbeständigen Polyethylenterephthalatfolie mit einer Dicke von 51 bis 178 µm (2—7 mil) und einem Schleiergrad von weniger als 1,0% zur Erhöhung der Fähigkeit der Folie, an anderen Materialien zu haften;

b) die Beschichtung von wenigstens einer Oberfläche der resultierenden Polyethylenterephthalatfolie bis zu einer Dicke von 21 µm mit einer organischen Silanol - Überzugszusammensetzung, welche umfasst:

(i) 5 bis 50 Gew.-% Feststoffe, wobei die Feststoffe ihrerseits 10 bis 70 Gew.-Teile Kieselgel; 1 bis 20 Gew.-Teile eines partiell polymerisierten Silanols mit Epoxfunktionen; und 30 bis 90 Gew.-% eines partiell polymerisierten organischen Silanols der allgemeinen Formel $RSi(OH)_3$, worin R Methyl ist, wobei gegebenenfalls bis zu 40% der R-Gruppen durch einen aus der aus Vinyl und Phenyl bestehenden Gruppe ausgewählten Rest ersetzt sind, und

(ii) 95 bis 50 Gew.-% Lösungsmittel, wobei das Lösungsmittel 10 bis 90 Gew.-Teile Wasser und 90 bis 10 Gew.-Teile eines niederen aliphatischen Alkohols umfasst und 0,01 bis 1,0% nach dem Gewicht des Lösungsmittels eines nichtionischen, oberflächenaktiven Mittels enthält;

wobei die Überzugszusammensetzung ein pH von 6,2 bis 6,5 aufweist;

c) das Verbinden der beschichteten Polyethylenterephthalatfolie bei erhöhter Wärme und erhöhtem Druck mit einer Folie aus plastifiziertem Polyvinylbutyral, um ein Laminat zu bilden, in dem die nicht an das Polyvinylbutyral gebundene Oberfläche des Polyethylenterephthalats mit der organischen Silanolzusammensetzung beschichtet ist, wobei die Polyethylenterephthalatfolie bei einer Temperatur oberhalb der Temperatur, bei welcher die beschichtete Folie mit der Folie aus plastifiziertem Polyvinylbutyral verbunden wird, in der Wärme relaxiert worden ist;

mit der Massgabe, dass die Feststoffe der organischen Silanolüberzugszusammensetzung keine 0,01 bis 4 Gew.-% azidofunktionelles Silan enthalten.

2. Verfahren nach Anspruch 1, worin das epoxyfunktionelle Silanol in der Überzugslösung im wesentlichen aus γ - Glycidoxypropyltrimethoxysilanol besteht.

3. Verfahren nach Anspruch 1, worin das epoxyfunktionelle Silanol im wesentlichen aus ß - (3,4 - Epoxycyclohexyl) - ethyltrimethoxysilanol besteht.

4. Verfahren nach Anspruch 1, 2 oder 3, worin das nichtionische, oberflächenaktive Mittel ein silikon - oberflächenaktives Mittel ist.

5. Verfahren nach einem der Ansprüche 1 bis 4, worin das Polyvinylbutyral weniger als 400 ppm eines Adhäsionssteuerungsmittels auf Kaliumbasis enthält.

6. Verfahren nach einem der Ansprüche 1 bis 5, worin die Polyethylenterephthalatfolie auf beiden Seiten mit einer reduzierenden Gasflamme behandelt wird, um die Fähigkeit der Folie, an anderen Materialien anzuhaften, zu erhöhen.

7. Verfahren nach einem der Ansprüche 1 bis 6, worin eine Seite der Polyethylenterephthalatfolie mit der Überzugszusammensetzung beschichtet wird und die Polyvinylbutyralfolie mit der unbeschichteten Seite der Polyethylenterephthalatfolie verbunden wird.

8. Verfahren nach einem der Ansprüche 1 bis 7, welches weiterhin die Verbindung wenigstens einer Glasscheibe mit der Oberfläche des plastifizierten Polyvinylbutyrals umfasst.

9. Polymeres Laminat, welches umfasst

a) eine Folie plastifiziertes Polyvinylbutyral,

b) eine biaxial orientierte, formbeständige Polyethylenterephthalatfolie, die mit dem Polyvinylbutyral verbunden ist und eine Dicke von 51 bis 178 µm (2 bis 7 mil) und einen Schleiergrad von weniger als 1,0% aufweist, wobei die Polyethylenterephthalatfolie bei einer Temperatur oberhalb der Temperatur, bei der die beschichtete Folie an die Folie aus plastifiziertem Polyvinylbutyral gebunden ist, wärmerelaxiert worden ist, und die Polyethylenterephthalatfolie auf beiden Seiten zur Erhöhung der Fähigkeit der Folie, an anderen Materialien anzuhaften, behandelt worden ist, und

c) eine Beschichtung auf der Polyethylenterephthalatfolie mit einer Dicke von 1 bis 20 µm, wobei die Beschichtung aus einer organischen Silanolzusammensetzung hergestellt worden ist, die umfasst:

(i) 5 bis 50 Gew.-% Feststoffe, wobei die Feststoffe ihrerseits 10 bis 70 Gew.-Teile Kieselgel; 1 bis 20 Gew.-Teile eines teilweise polymerisierten epoxyfunktionellen Silanols; und 30 bis 99 Gew.-Teile eines partiell polymerisierten organischen Silanols der allgemeinen Formel $RSi(OH)_3$ umfasst, worin R Methyl ist, wobei gegebenenfalls bis zu 40% der R-Gruppen durch einen aus der aus Vinyl und Phenyl bestehenden Gruppe ausgewählten Rest ersetzt sind, und

(ii) 95 bis 50 Gew.-% Lösungsmittel, wobei das Lösungsmittel 10 bis 90 Gew.-Teile Wasser und 90 bis 10 Gew.-Teile eines niederen aliphatischen Alkohols umfasst und 0,01 bis 1% nach dem Gewicht des Lösungsmittels eines nichtionischen oberflächenaktiven Mittels enthält,

wobei die Überzugszusammensetzung ein pH von 6,2 bis 6,5 hat;

und worin wenigstens die nicht an das Polyvinylbutyral gebundene Oberfläche des Polyethylenterephthalats den Überzug (c) trägt;

mit der Massgabe, dass die Feststoffe der organischen Silanolüberzugszusammensetzung keine 0,01 bis 4 Gew.-% azidofunktionelles Silan umfassen.

10. Laminat nach Anspruch 9, worin das epoxyfunktionelle Silanol in der Überzugslösung im wesentlichen aus γ - Glycidoxypropyltrimethoxysilanol besteht.

11. Laminat nach Anspruch 9, worin das epoxyfunktionelle Silanol im wesentlichen aus ß - (3,4 - Epoxycyclohexyl) - ethyltrimethoxysilanol besteht.

12. Laminat nach Anspruch 9, 10 oder 11, worin das nichtionische, oberflächenaktive Mittel ein silikon - oberflächenaktives Mittel ist.

13. Laminat nach einem der Ansprüche 9 bis 12, worin das Polyvinylbutyral weniger als 400 ppm eines Adhäsionssteuerungsmittels auf Kaliumbasis enthält.

14. Laminat nach einem der Ansprüche 9 bis 13, worin die Polyethylenterephthalatfolie auf beiden Seiten mit einer reduzierenden Gasflamme behandelt wird, um die Fähigkeit der Folie zu erhöhen, an anderen Materialien anzuhaften.

15. Laminat nach einem der Ansprüche 9 bis 14, worin eine Seite der Polyethylenterephthalatfolie mit der Überzugszusammensetzung beschichtet ist und die Polyvinylbutyralfolie mit der unbeschichteten Seite der Polyethylenterephthalatfolie verbunden ist.

16. Laminat nach einem der Ansprüche 9 bis 15, welches weiterhin wenigstens eine Glasscheibe umfasst, die mit der Oberfläche des plastifizierten Polyvinylbutyrals verbunden ist.

## Revendications

1. Un procédé pour fabriquer un stratifié polymère consistant à:

a) traiter les deux faces d'une pellicule de polytéréphtalate d'éthylène orientée biaxialement, dimensionnellement stable, ayant une épaisseur de 51 à 178 μm (2 à 7 mils) et un taux de voile inférieur à 1,0%, de manière à accroître l'aptitude de la pellicule à adhérer à d'autres matériaux;

b) revêtir au moins une surface de la pellicule de polytéréphtalate d'éthylène résultante sur une épaisseur de 1 à 20 μm avec une composition de revêtement à base de silanols organiques comprenant:

(i) 5 à 50 pour cent en poids de matières solides, les matières solides comprenant, de façon complémentaire, 10 à 70 parties en poids de silice; 1 à 20 parties en poids d'un silanol à fonction époxy partiellement polymérisé; et 30 à 90 parties en poids d'un silanol organique, partiellement polymérisé, de la formule générale $RSi(OH)_3$, où R est le radical méthyle, jusqu'à 40% des groupes R étant facultativement remplacés par un radical choisi dans le groupe formé par les radicaux vinyle et phényle, et

(ii) 95 à 50 pour cent en poids d'un solvant, le solvant comprenant 10 à 90 parties en poids d'eau et 90 à 10 parties en poids d'un alcool aliphatique inférieur, et contenant 0,01 à 1,0% en poids, par rapport au poids de solvant, d'un agent tensio-actif non ionique; la composition de revêtement ayant un pH de 6,2 à 6,5;

c) lier, sous chaleur et pression élevées, la pellicule de polytéréphtalate d'éthylène revêtue à une feuille de butyral polyvinylique plastifié pour obtenir un stratifié dans lequel la surface du polytéréphtalate d'éthylène qui n'est pas liée au butyral polyvinylique est revêtue par la composition à base des silanols organiques, ladite pellicule de polytéréphtalate d'éthylène àyant été relaxée thermiquement à une température supérieure à la température à laquelle la pellicule revêtue est liée à la feuille de butyral polyvinylique plastifié;

avant la condition que

les matières solides de la composition de revêtement à base de silanols organiques ne comprennent pas 0,01 à 4 pour cent en poids de silane à fonction azido.

2. Un procédé de la revendication 1, dans lequel le silanol à fonction époxy contenu dans la solution de revêtement consiste essentiellement en gamma - glycidoxypropyl - triméthoxysilanol.

3. Un procédé de la revendication 1, dans lequel le silanol à fonction époxy consiste essentiellement en bêta - (3,4 - époxycyclohexyl) - éthyltriméthoxy - silanol.

4. Un procédé de la revendication 1, 2 ou 3, dans lequel l'agent tensio-actif non ionique est un agent tensio-actif du type silicone.

5. Un procédé de l'une quelconque des revendications 1 à 4, dans lequel le butyral polyvinylique contient moins de 400 parties par million d'agent anti-adhérence à base de potassium.

6. Un procédé de l'une quelconque des revendications 1 à 5, dans lequel la pellicule de polytéraphtalate d'éthylène est traitée sur ses deux faces par une flamme de gaz réductrice pour accroître l'aptitude de la pellicule à adhérer à d'autres matériaux.

7. Un procédé de l'une quelconque des revendications 1 à 6, dans lequel une seule face de la pellicule de polytéréphtalate d'éthylène est revêtue par la composition de revêtement et la feuille de butyral polyvinylique est liée à la face non revêtue de la pellicule de polytéréphtalate d'éthylène.

8. Un procédé de l'une quelconque des revendications 1 à 7, qui consiste de plus à lier au moins une feuille de verre à la surface du butyral polyvinylique plastifié.

9. Un stratifié polymère comprenant,

(a) une feuille de butyral polyvinylique plastifié,

(b) une pellicule de polytéréphtalate d'éthylène orientée biaxialement, dimensionnellement stable, liée au butyral polyvinylique, et ayant une épaisseur de 51 à 178 μm (2 à 7 mils) et un taux de voile inférieur à 1,0%, la pellicule de polytéréphtalate d'éthylène ayant été relaxée thermiquement à une température supérieure à la température à laquelle la pellicule revêtue a été liée à la feuille de butyral polyvinylique plastifié, et la pellicule de polytéréphtalate d'éthylène ayant été traitée sur ses deux faces pour accroître l'aptitude de la pellicule à adhérer à d'autres matériaux, et

c) un revêtement ayant une épaisseur de 1 à 20 μm appliqué sur la pellicule de polytéréphtalate d'éthylène, le revêtement ayant été produit à partir d'une composition à base de silanols organiques comprenant:

(i) 5 à 50 pour cent en poids de matières solides, les matières solides comprenant, de façon complémentaire, 10 à 70 parties en poids de silice; 1 à 20 parties en poids d'un silanol à fonction époxy partiellement polymérisé; et 30 à 90 parties en poids d'un silanol organique, partiellement polymérisé, de la formule générale RSi(OH)$_3$, où R est le radical méthyle, jusqu'à 40% des groupes R étant remplacée par un radical choisi dans le groupe formé par les radicaux vinyle et phényle, et

(ii) 95 à 50 pour cent en poids d'un solvant, le solvant comprenant 10 à 90 parties en poids d'eau et 90 à 10 parties en poids d'un alcool aliphatique inférieur, et contenant 0,01 à 1,0% en poids, par rapport au poids de solvant, d'un agent tensio-actif non ionique; la composition de revêtement ayant un pH de 6,2 à 6,5; et dans lequel au moins la surface du polytéréphtalate d'éthylène qui n'est pas liée au butyral polyvinylique porte le revêtement (c); avec la condition que les matières solides de la composition de revêtement aux silanols organiques ne comprennent pas 0,01 à 4 pour cent en poids de silane à fonction azido.

10. Un stratifié de la revendication 9, dans lequel le silanol à fonction époxy contenu dans la solution de revêtement consiste essentiellement en gamma - glycidoxypropyl - triméthoxysilanol.

11. Un stratifié de la revendication 9, dans lequel le silanol à fonction époxy consiste essentiellement en bêta - (3,4 - époxycyclohexyl) - éthyltriméthoxy - silanol.

12. Un stratifié de la revendication 9, 10 ou 11, dans lequel l'agent tensio-actif non ionique est un agent tensio-actif du type silicone.

13. Un stratifié de l'une quelconque des revendications 9 à 12, dans lequel le butyral polyvinylique contient moins de 400 parties par million d'agent anti-adhérence à base de potassium.

14. Un stratifié de l'une quelconque des revendications 9 à 13, dans lequel la pellicule de polytéréphtalate d'éthylène est traitée sur ses deux faces par une flamme de gaz réductrice pour accroître l'aptitude de la pellicule à adhérer à d'autres matériaux.

15. Un stratifié de l'une quelconque des revendications 9 à 14, dans lequel une seule face de la pellicule de polytéréphtalate d'éthylène est revêtue par la composition de revêtement et la feuille de butyral polyvinylique est liée à la face non revêtue de la pellicule de polytéréphtalate d'éthylène.

16. Un stratifié de l'une quelconque des revendications 9 à 15, comprenant de plus au moins une feuille de verre liée à la surface du butyral polyvinylique plastifié.